# EUROPÄISCHE PATENTSCHRIFT

(11) **EP 3 136 647 B1**
(45) Veröffentlichungstag und Bekanntmachung des Hinweises auf die Patenterteilung: **29.04.2020**
(21) Anmeldenummer: 16001883.4
(22) Anmeldetag: 26.08.2016
(51) Int. Cl.: H04L 9/32, H04L 9/08

(54) **VERFAHREN ZUM DURCHFÜHREN EINER KRYPTOGRAPHISCHEN OPERATION**
METHOD FOR PERFORMING A CRYPTOGRAPHIC OPERATION
PROCEDE D'EXECUTION D'UNE OPERATION CRYPTOGRAPHIQUE

(30) Priorität: 28.08.2015 DE 102015011369
(43) Veröffentlichungstag der Anmeldung: 01.03.2017
(73) Patentinhaber: Giesecke+Devrient Mobile Security GmbH, 81677 München (DE)
(72) Erfinder: Tea, Vui Huang, SE-12061 Stockholm (SE)

(56) Entgegenhaltungen:
- DE-A1-102010 030 590
- DE-A1-102013 203 257
- US-A1- 2006 248 342
- "Universal Mobile Telecommunications System (UMTS); LTE; 3G security; Security architecture (3GPP TS 33.102 version 8.6.0 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. 3GPP SA 3, Nr. V8.6.0, 1. April 2010 (2010-04-01), XP014046843,

## Beschreibung

Die vorliegende Erfindung betrifft ein Verfahren zum Durchführen einer kryptographischen Operation, insbesondere einer kryptographischen Operation im Rahmen einer Authentisierung eines Sicherheitselements gegenüber einem Dritten, beispielsweise gegenüber einem Dienstanbieter.

US 2006/0248342 A1 zeigt eine Telekommunikationsanordnung, in der ein sogenanntes Challenge-Response-Verfahren ausgeführt wird.

Um die Sicherheit von Online-Diensten zu erhöhen, insbesondere aus Sicht eines Nutzers solcher Dienste, sind erweiterte Sicherheitsmaßnahmen bei der Authentisierung des Nutzers gegenüber einem Dienstanbieter vorgeschlagen worden. Im Rahmen einer so genannten Mehr-Faktor-Authentifikation kann der Nutzer, zusätzlich zu einem Nutzernamen und einem Passwort, ein Sicherheitselement vorweisen, beispielsweise in Form eines USB-Tokens, einer SIM-Mobilfunkkarte oder dergleichen. Darin kann ein nur dem Dienstanbieter bekanntes Geheimdatum gespeichert sein, beispielsweise ein kryptographischer Schlüssel. Dieser Schlüssel kann dann zum Durchführen einer kryptographischen Operation verwendet werden, beispielsweise im Rahmen eines so genannten "Challenge-Response"-Verfahrens.

Dabei sendet der Dienstanbieter eine Anfragenachricht an das Sicherheitselement. Das Sicherheitselement bearbeitet die Anfragenachricht in vorgegebener Weise mittels einer kryptographischen Operation auf Basis des Geheimdatums und überträgt, als Antwortnachricht, die kryptographisch bearbeitete Anfragenachricht an den Dienstanbieter. Im einfachsten Fall kann das Sicherheitselement als Anfragenachricht beispielsweise eine zufällige Zeichenfolge erhalten und diese, zum Bilden der Antwortnachricht, mittels des geheimen Schlüssels verschlüsseln. Zum Prüfen der Antwortnachricht führt der Dienstanbieter seinerseits die entsprechende Verschlüsselung der Zeichenfolge mittels des ihm ebenfalls vorliegenden Schlüssels durch und vergleicht das Ergebnis mit der empfangenen Antwortnachricht.

Alternativ verwendbare kryptographische Operationen sind beispielsweise das kryptographische Signieren von Daten oder das Erzeugen von Einmalpasswörtern oder dergleichen auf Basis eines Eingabewertes.

Auf diese Weise wird sichergestellt, dass ein sich gegenüber dem Dienstanbieter authentisierender Nutzer im Besitz des Sicherheitselements ist. Bei Verlust des Sicherheitselements allerdings besteht die Gefahr, dass sich ein unberechtigter Dritter, wenn er Kenntnis von dem Passwort des legitimen Nutzers erlangt hat, anstelle des legitimen Nutzers beim Dienstanbieter anmeldet, ohne dass der Dienstanbieter die Möglichkeit hat, den unberechtigten Dritten von dem legitimen Nutzer zu unterscheiden.

Aufgabe der vorliegenden Erfindung ist es, ein Verfahren und ein System vorzuschlagen, welche den genannten Problemen Rechnung trägt.

Diese Aufgabe wird durch ein Verfahren, eine zentrale Instanz, ein Sicherheitselement sowie ein System mit den Merkmalen der nebengeordneten Ansprüche gelöst. Vorteilhafte Ausgestaltungen und Weiterbildungen sind in den abhängigen Ansprüchen angegeben.

Die vorliegende Erfindung basiert auf dem Grundgedanken, dass nicht zum Bilden der Antwortnachricht an den Dienstanbieter ein umgebungsabhängiger Schlüssel verwendet wird, sondern dass die an das Sicherheitselement gerichtete Anfragenachricht, welche von dem Dienstanbieter erzeugt wird, über eine zentrale Instanz umgeleitet wird, welche diese Anfragenachricht mittels eines ersten kryptographischen Schlüssels verschlüsselt, der durch eine vorgegebene Umgebung des Sicherheitselements bestimmt ist. Das Sicherheitselement selbst entschlüsselt die verschlüsselte Anfragenachricht mittels eines seitens des Sicherheitselements gebildeten zweiten kryptographischen Schlüssels, welcher durch die aktuelle Umgebung des Sicherheitselements bestimmt ist - und bearbeitet dann in herkömmlich bekannter Weise die entschlüsselte Anfragenachricht zum Bilden der Antwortnachricht im Rahmen einer - umgebungsunabhängigen - kryptographischen Operation.

In dem Fall, dass die vorgegebene Umgebung, welche der Ableitung des ersten kryptographischen Schlüssels zugrunde liegt, mit der aktuellen Umgebung des Sicherheitselements übereinstimmt, welche den zweiten kryptographischen Schlüssel definiert, stimmen der erste und der zweite kryptographische Schlüssel überein - und die entschlüsselte Anfragenachricht entspricht der ursprünglichen Anfragenachricht.

In dem Fall jedoch, dass die aktuelle Umgebung des Sicherheitselements von der vorgegebenen Umgebung abweicht, ergibt die "Entschlüsselung" der verschlüsselten Anfragenachricht ein Datum, das von der ursprünglichen Anfragenachricht abweicht. Folglich wird durch das Sicherheitselement zum Bilden der Antwortnachricht ein Datum kryptographisch bearbeitet, welches von der ursprünglichen Anfragenachricht abweicht - mit dem Resultat, dass auch die auf diese Weise gebildete "Antwortnachricht" von einer Antwortnachricht abweicht, die auf Basis der ursprünglichen Anfragenachricht gebildet worden ist.

Auf Seiten des Dienstanbieters ist der Aufwand zum Verifizieren der Antwortnachricht derselbe wie ohne Verwendung eines umgebungsabhängigen Schlüssels - es muss lediglich die Antwortnachricht verifiziert werden, welche im Rahmen einer kryptographischen Operation aus der Anfragenachricht, mittels eines vorgegebenen, umgebungsunabhängigen Geheimdatums, durch das Sicherheitselement erzeugt worden ist. Gleichwohl kann der Dienstanbieter - indirekt - zuverlässig erkennen, ob die aktuelle Umgebung des Sicherheitselements beim Erzeugen des zweiten kryptographischen Schlüssels der vorgegebenen Umgebung entsprochen hat, welche den ersten kryptographischen Schlüssel definiert, nämlich daran, ob die Verifikation der Antwortnachricht erfolgreich ist oder nicht. Mit anderen Worten kann das vorliegende Verfahren den zusätzlichen Sicherheitsgewinn bereitstellen, welcher auf der Verwendung eines umgebungsabhängigen Schlüssels beruht, ohne dass der Aufwand auf Seiten des Dienstanbieters dadurch erhöht wird.

Eine bevorzugte Ausführungsform eines Verfahrens zum Durchführen einer kryptographischen Operation zwischen einem Sicherheitselement und einem beliebigen Dritten, beispielsweise einem Dienstanbieter eines Online-Dienstes, umfasst die folgenden Schritte:
Der Dienstanbieter sendet eine an das Sicherheitselement gerichtete Anfragenachricht. Die Anfragenachricht wird durch das Sicherheitselement zum Bilden einer Antwortnachricht kryptographisch bearbeitet. Dies kann in herkömmlich bekannter Weise erfolgen, beispielsweise unter Verwendung eines umgebungsunabhängigen Geheimdatums, beispielsweise eines kryptographischen Schlüssels, durch Verschlüsseln oder Signieren der Anfragenachricht. Die Anfragenachricht kann auch als Eingangswert zum Bilden eines Einmalpasswortes, einer TAN oder dergleichen verwendet werden.

Die Antwortnachricht wird dann an den Dienstanbieter gesendet, welcher diese in bekannter Weise verifiziert.

Die Erfindung zeichnet sich dadurch aus, dass eine zentrale Instanz eingeführt wird, welche die an das Sicherheitselement gerichtete Anfragenachricht von dem Dienstanbieter empfängt. D.h. die Anfragenachricht wird nicht direkt an das Sicherheitselement gerichtet, sondern erreicht zuerst die zentrale Instanz.

Die zentrale Instanz erzeugt dann einen ersten kryptographischen Schlüssel, welcher von einer vorgegebenen Umgebung des Sicherheitselements abhängt.

Zum einen kann eine Umgebung des Sicherheitselements von einem Endgerät mit bestimmt werden, mit welchem das Sicherheitselement gekoppelt ist. In dem Fall, dass als Sicherheitselement eine SIM/UICC-Mobilfunkkarte verwendet wird, kann ein mobiles Endgerät, wie beispielsweise ein Smartphone, in welches die Mobilfunkkarte integriert ist, die Umgebung des Sicherheitselements definieren, beispielsweise über eine das mobile Endgerät eindeutig identifizierende Kennung, wie beispielsweise eine IMEI. Spezifische Einstellungen, wie beispielsweise Spracheinstellungen, des Endgeräts können zur alternativen oder zusätzlichen Bestimmung der Umgebung des Sicherheitselements ebenfalls herangezogen werden.

Eine Umgebung des Sicherheitselements kann weiterhin durch eine Netzwerkumgebung definiert sein, in welcher sich das Sicherheitselement befindet. Dazu können seitens des Sicherheitselements verschiedene Parameter des Netzwerks bestimmt werden.

Eine Umgebung des Sicherheitselements kann überdies zeitabhängig sein. Dabei kann eine Tageszeit, ein Wochentag, ein vorgegebenes Datum oder dergleichen zur Definition der Umgebung des Sicherheitselements herangezogen werden.

Gemäß einer weiteren bevorzugten Variante kann die Umgebung eines Sicherheitselements ortsabhängig sein. D.h. die Umgebung des Sicherheitselements wird dadurch mit bestimmt, wo sich das Sicherheitselement befindet. Die Ortsangabe kann dabei relativ genau erfolgen, beispielsweise auf Basis von GPS-Daten, oder aber weniger genau, beispielsweise lediglich bezogen auf den Aufenthalt des Sicherheitselements in einer Mobilfunkzelle, einer Stadt, einem Land oder einer Zeitzone.

Es versteht sich, dass zur Definition einer Umgebung des Sicherheitselements beliebige Kombinationen der vorstehend beschriebenen Varianten herangezogen werden können.

Die vorgegebene Umgebung des Sicherheitselements, welche eine Ableitung oder Erzeugung des ersten kryptographischen Schlüssels durch die zentrale Instanz definiert, kann somit durch Vorgaben bestimmt werden, die bei der zentralen Instanz mit Bezug auf das Sicherheitselement hinterlegt sind. Diese Vorgaben können, wie erwähnt, insbesondere ein mit dem Sicherheitselement zum Durchführen des Verfahrens zu koppelndes Endgerät betreffen. Alternativ oder zusätzlich können die Vorgaben einen Zeitraum betreffen, innerhalb dessen das Sicherheitselement zum Durchführen des Verfahrens verwendbar sein soll. Ebenso alternativ oder zusätzlich können die Vorgaben einen Aufenthaltsort eines Sicherheitselements definieren, an welchem sich das Sicherheitselement befinden muss, während das erfindungsgemäße Verfahren durchgeführt wird.

Entsprechende Vorgaben können seitens des Nutzers des Sicherheitselements in einem dem eigentlichen Verfahren vorgelagerten Registrierungsschritt bei der zentralen Instanz mit Bezug auf das Sicherheitselement hinterlegt werden. Überdies kann es vorgesehen sein, dass der Nutzer des Sicherheitselements diese Vorgaben bei Bedarf ändert oder ergänzt. Ein Nutzer kann bei der zentralen Instanz beispielsweise eine Kennung eines Mobilfunkendgerätes angeben, mit dem ein Sicherheitselement in Form einer Mobilfunkkarte zum Durchführen des Verfahrens gekoppelt sein muss. Überdies kann angegeben werden, dass das Verfahren lediglich wochentags zwischen 8:00 Uhr und 18:00 Uhr an einem Ort durchgeführt werden soll, der im nahen Umkreis einer Arbeitsstelle des Nutzers liegt. Der seitens der zentralen Instanz erzeugte erste kryptographische Schlüssel codiert dann quasi diese Vorgaben.

Die aktuelle Umgebung des Sicherheitselements wird dann beispielsweise bestimmt durch ein Endgerät, mit dem das Sicherheitselement beim Durchführen des Verfahrens gekoppelt ist. Alternativ oder zusätzlich kann die aktuelle Umgebung des Sicherheitselements durch den Zeitpunkt oder den Zeitraum, in dem das Verfahren durchgeführt wird, mit bestimmt werden. Ebenfalls alternativ oder zusätzlich kann ein Ort, an dem sich das Sicherheitselement beim Durchführen des Verfahrens befindet, die aktuelle Umgebung des Sicherheitselements mit bestimmen. Mit Bezug auf das Beispiel im vorhergehenden Absatz würde ein seitens des Sicherheitselements erzeugter zweiter kryptographischer Schlüssel mit dem seitens der zentralen Instanz abgeleiteten ersten kryptographischen Schlüssel übereinstimmen, wenn der zweite kryptographische Schlüssel an einem Dienstag (wochentags) um 15:30 Uhr (zwischen 8:00 Uhr und 18:00 Uhr) an der Arbeitsstelle des Nutzers erzeugt worden wäre, während das Sicherheitselement mit dem seitens des Nutzers angegebenen Endgerät gekoppelt gewesen wäre. Die Koppelung des Sicherheitselements mit einem davon abweichenden Gerät, eine Schlüsselerzeugung am Wochenende und/oder nach 18:00 Uhr und/oder weit abseits der Arbeitsstelle des Nutzers hingegen würde zu einem zweiten kryptographischen Schlüssel führen, welcher von dem ersten kryptographischen Schlüssel abweicht - und in der Folge zu einem Scheitern des Verfahrens, d.h. einer nicht erfolgreichen Verifikation der Antwortnachricht beim Dienstanbieter.

In der Regel ist das Sicherheitselement eingerichtet, die aktuelle Umgebung selbst zu bestimmen, beispielsweise in Zusammenarbeit mit dem Endgerät, mit welchen das Sicherheitselement gekoppelt ist. Dabei kann eine Mobilfunkkarte beispielsweise auf Anwendungen des so genannten "SIM-Applikation-Toolkit" (STK) zurückgreifen und verschiedene Umgebungsparameter, wie zum Beispiel das aktuelle Datum, die Uhrzeit, eine Gerätekennung (IMEI) und/oder verschiedene Ortsparameter (MCC, MNC, LAC, die aktuelle Mobilfunkzelle) bestimmen.

Gemäß einer bevorzugten Variante des Verfahrens erzeugt die zentrale Instanz eine Mehrzahl von unterschiedlichen, ersten kryptographischen Schlüsseln. Dabei hängt jeder dieser unterschiedlichen, ersten kryptographischen Schlüssel jeweils von einer möglichen Variante einer vorgegebenen Umgebung des Sicherheitselements ab. Ein erster dieser Schlüssel kann beispielsweise ein erstes Endgerät betreffen, mit welchem das Sicherheitselement zum Durchführen der kryptographischen Operation gekoppelt sein kann, ein zweiter dieser Schlüssel kann eine Umgebung beschreiben, die durch ein zweites Endgerät bestimmt ist, welches der Nutzer zum Durchführen des Verfahrens als mögliche Umgebung bei der zentralen Instanz vorgegeben hat. Weitere mögliche Umgebungen können durch verschiedene Zeiträume und/oder verschiedene Orte bestimmt werden sowie über mögliche Kombinationen der verschiedenen Umgebungsvarianten Gerät/Zeit/Ort. Dadurch wird es dem Nutzer des Sicherheitselements ermöglicht, die Einsetzbarkeit des Sicherheitselements im Rahmen des Verfahrens variabler vorzugeben.

Die zentrale Instanz verschlüsselt dann die Anfragenachricht jeweils separat mittels jedes der Mehrzahl der unterschiedlichen, ersten kryptographischen Schlüssel und sendet jede der dadurch erhaltenen unterschiedlichen, verschlüsselten Anfragenachrichten an das Sicherheitselement.

Das Sicherheitselement entschlüsselt jede der unterschiedlichen, verschlüsselten Anfragenachrichten mittels des vorstehend beschriebenen, auf Basis der aktuellen Umgebung des Sicherheitselements abgeleiteten zweiten kryptographischen Schlüssels. Dabei ist der Begriff des "Entschlüsseins" vorliegend als rein mechanische bzw. rein algorithmische Tätigkeit zu verstehen, welche auf eine Zeichenkette, das heißt auf die verschlüsselte Anfragenachricht, angewendet wird. Ein Entschlüsseln auf Basis eines zweiten kryptographischen Schlüssels, der nicht zu einem ersten kryptographischen Schlüssel passt, der zum Verschlüsseln der Anfragenachricht verwendet worden ist, führt zwar inhaltlich zu einem nicht korrekten Ergebnis, das heißt die derart "entschlüsselte Anfragenachricht" entspricht nicht der ursprünglichen Anfragenachricht; dies führt aber im Rahmen des vorliegenden Verfahrens auf Seiten des Sicherheitselements zu keinem Fehler im Ablauf.

Das Sicherheitselement bearbeitet dann jede der auf diese Weise entschlüsselten Anfragenachrichten mittels der kryptographischen Operation und erhält dadurch eine Reihe unterschiedlicher Antwortnachrichten, welche sämtlich an den Dienstanbieter weitergeleitet werden.

Der Dienstanbieter verifiziert jede der erhaltenen Antwortnachrichten und erkennt dabei insbesondere, ob zumindest eine der Antwortnachrichten auf Basis der ursprünglichen Anfragenachricht gebildet worden ist. Ist dies der Fall, gilt die Verifikation als erfolgreich, im anderen Fall als gescheitert.

Gemäß einer bevorzugten Variante dieser Ausführungsform versieht die zentrale Instanz die Anfragenachricht jeweils vor dem Verschlüsseln mit einem der ersten kryptographischen Schlüssel mit einer Prüfsumme. Diese Prüfsumme kann dann seitens des Sicherheitselements - nach dem Entschlüsseln mittels des zweiten kryptographischen Schlüssels - geprüft werden. Auf diese Weise kann bereits das Sicherheitselement feststellen, welche der entschlüsselten Anfragenachrichten der ursprünglichen Anfragenachricht entspricht - nämlich diejenige, die eine korrekte Prüfsumme ergibt. Das Sicherheitselement muss dann lediglich diese eine Anfragenachricht zum Bilden der Antwortnachricht kryptographisch bearbeiten und an den Dienstanbieter weiterleiten.

Wie bereits angedeutet, sendet der Dienstanbieter die an das Sicherheitselement gerichtete Anfragenachricht im ersten Schritt des Verfahrens vorzugsweise direkt an die zentrale Instanz.

Gemäß einer ersten Variante kann das Sicherheitselement die Antwortnachricht bzw. die verschiedenen Antwortnachrichten direkt an den Dienstanbieter senden.

Gemäß einer zweiten Variante kann das Sicherheitselement die Antwortnachricht bzw. die verschiedenen Antwortnachrichten an die zentrale Instanz senden, welche diese dann an den Dienstanbieter weiterleitet.

Eine zentrale Instanz im Sinne der vorliegenden Erfindung umfasst eine Umgebungsschlüsselverwaltungseinrichtung, die eingerichtet ist, mit Bezug auf ein Sicherheitselement einen ersten kryptographischen Schlüssel zu erzeugen, welcher von einer vorgegebenen Umgebung des Sicherheitselements abhängt. Eine solche vorgegebene Umgebung kann, wie bereits beschrieben, in einem Registrierungsschritt seitens eines Nutzers des Sicherheitselements vorgegeben und bei der zentralen Instanz gespeichert sein.

Die Umgebungsschlüsselverwaltungseinrichtung ist weiter eingerichtet, eine vorzugsweise von einem Dienstanbieter empfangene, für das Sicherheitselement bestimmte Anfragenachricht mittels des ersten kryptographischen Schlüssels zu verschlüsseln und die verschlüsselte Anfragenachricht an das Sicherheitselement zu senden.

Die zentrale Instanz kann weiter eingerichtet sein, eine vom dem Sicherheitselement in Antwort auf die verschlüsselte Anfragenachricht empfangene Antwortnachricht an den Dienstanbieter weiterzuleiten.

Eine bevorzugte Ausführungsform eines erfindungsgemäßen Sicherheitselements umfasst eine Umgebungsschlüsselableitungseinrichtung. Diese ist eingerichtet, einen zweiten kryptographischen Schlüssel zu erzeugen, welcher von einer aktuellen Umgebung des Sicherheitselements abhängt. Dies umfasst implizit, dass die Umgebungsschlüsselableitungseinrichtung eingerichtet ist, die aktuelle Umgebung des Sicherheitselements zu erkennen oder zu bestimmen.

Das Sicherheitselement umfasst weiterhin eine Verarbeitungseinrichtung, welche eingerichtet ist, mittels des zweiten kryptographischen Schlüssels eine seitens einer vorstehend beschriebenen zentralen Instanz empfangene, verschlüsselte Anfragenachricht zu entschlüsseln und die entschlüsselte Anfragenachricht zum Bilden einer Antwortnachricht kryptographisch zu bearbeiten.

Ein erfindungsgemäßes System schließlich umfasst zumindest einen Dienstanbieter, eine zentrale Instanz der beschriebenen Art sowie zumindest ein vorstehend beschriebenes Sicherheitselement. Diese Komponenten des Systems sind jeweils eingerichtet, ein vorstehend beschriebenes Verfahren durchzuführen.

Die vorliegende Erfindung wird nachfolgend beispielhaft mit Bezug auf die beiliegenden Zeichnungen beschrieben. Darin zeigen:
- Figur 1: Schritte einer bevorzugten Ausführungsform eines erfindungsgemäßen Verfahrens und
- Figur 2: ausgewählte Schritte einer bevorzugten Variante des Verfahrens gemäß Fig. 1.

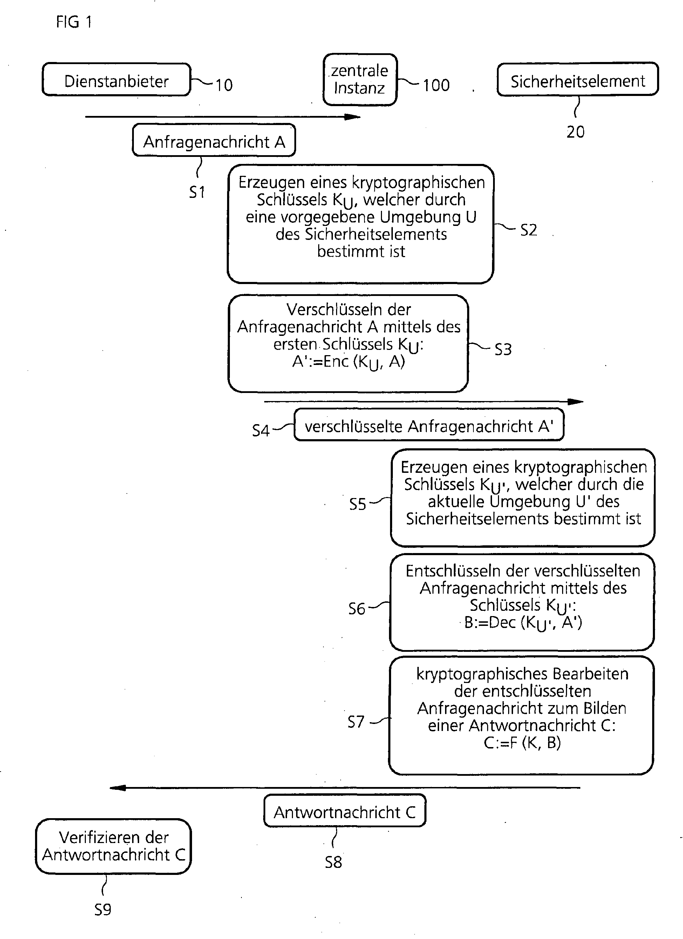

Wie in Figur 1 angegeben, erzeugt ein Dienstanbieter 10 in Schritt S1 eine Anfragenachricht A und sendet diese an eine zentrale Instanz 100. Der Dienstanbieter 10 kann beispielsweise der Betreiber eines Online-Dienstes sein. Grundsätzlich kann an die Stelle des Dienstanbieters 10 jeder Dritte treten, welcher eingerichtet ist, die mit Bezug zum dem Dienstanbieter 10 beschriebenen Schritte S1 und S9 (vgl. nachstehend) durchzuführen.

Die Anfragenachricht A kann beispielsweise eine zufällige Zeichenkette sein, welche an ein Sicherheitselement 20 gerichtet ist und eine "Challenge" im Rahmen eines "Challenge-Response"-Verfahrens darstellt. Das "Challenge-Response"-Verfahren kann dazu dienen, das Sicherheitselement 20 zu authentifizieren, welches beispielsweise zusätzlich zu einem Nutzernamen und einem Passwort eines Nutzers verwendet wird, um einen Nutzer gegenüber dem Dienstanbieter zu authentifizieren (Mehr-Faktor-Authentifizierung).

Der Nutzer des Sicherheitselements 20 hat sich in einem dem in Figur 1 gezeigten Verfahren vorgelagerten, nicht gezeigten Schritt bei der zentralen Instanz 100 registriert und mit Bezug auf das Sicherheitselement 20 Vorgaben hinsichtlich einer zulässigen Umgebung des Sicherheitselements 20 hinterlegt. Diese Vorgaben definieren die Umgebung U, in welcher sich das Sicherheitselement 20 zu befinden hat, wenn eine Authentisierung des Sicherheitselements 20 gegenüber dem Dienstanbieter 10 erfolgt.

In Schritt S2 erzeugt die zentrale Instanz 100 einen kryptographischen Schlüssel Ku, welcher durch die vorgegebene Umgebung U des Sicherheitselements 20 bestimmt ist. In diese Schlüsselerzeugung kann zusätzlich ein Geheimdatum, z.B. ein Ausgangsschlüssel, mit eingehen.

Danach verschlüsselt die zentrale Instanz 100 in Schritt S3 die Anfragenachricht A mittels dieses ersten kryptographischen Schlüssels Ku und erhält dabei eine verschlüsselte Anfragenachricht A'.

Diese verschlüsselte Anfragenachricht A' sendet die zentrale Instanz 100 in Schritt S4 an das Sicherheitselement 20.

Das Sicherheitselement 20 seinerseits erzeugt einen kryptographischen Schlüssel K_{U'}, welcher durch die aktuelle Umgebung U' des Sicherheitselements 20 bestimmt ist. Wird bei der Erzeugung des ersten kryptographischen Schlüssels Ku durch die zentrale Instanz 100 ein Ausgangsschlüssel miteinbezogen, so umfasst auch das Sicherheitselement 20 diesen Ausgangsschlüssel, und bezieht diesen in entsprechender Weise beim Erzeugen des zweiten kryptographischen Schlüssels K_{U'} mit ein.

Wie bereits erwähnt, kann das Sicherheitselement 20 insbesondere als USB-Token oder als SIM/UICC- Mobilfunkkarte ausgebildet sein. Eine Mobilfunkkarte kann beispielsweise über SIM-Applikation-Toolkit Kommandos bei einem Endgerät, mit welchem die Karte gekoppelt ist, Informationen hinsichtlich der aktuellen Umgebung (Geräte-Identifikation, Ort, Zeit, Netzwerkumgebung, et cetera) erfragen.

In dem Fall, dass die aktuelle Umgebung U' des Sicherheitselements 20 mit der bei der zentralen Instanz 100 vorgegebenen Umgebung U übereinstimmt, stimmt auch der zweite kryptographischen Schlüssel K_{U'}, der im Sicherheitselement 20 abgeleitet worden ist, mit dem ersten kryptographischen Schlüssel K_{U} überein, welcher durch die zentrale Instanz 100 erzeugt worden ist.

Dann ergibt sich als Ergebnis des Schrittes S6, in welchem das Sicherheitselement 20 die in Schritt S4 empfangene, verschlüsselte Anfragenachricht mittels des zweiten kryptographischen Schlüssels K_{U'} entschlüsselt, ein Datum B, welches mit der ursprünglichen Anfragenachricht A übereinstimmt.

In dem Fall jedoch, dass die aktuelle Umgebung U' des Sicherheitselements 20 von der vorgegebenen Umgebung U abweicht, wird sich ein Datum B ergeben, welches nicht mit der Anfragenachricht A übereinstimmt.

In Schritt S7 bildet das Sicherheitselement 20 eine Antwortnachricht C durch kryptografisches Bearbeiten des Datums B, d.h. der entschlüsselten Anfragenachricht. Dazu wird vorzugsweise ein Geheimdatum K verwendet, welches dem Dienstanbieter 10 bekannt ist und welches umgebungsunabhängig ist.

Eine derart gebildete Antwortnachricht C wird in Schritt S8 an den Dienstanbieter 10 gesendet, entweder direkt durch das Sicherheitselement 20 oder indirekt über die zentrale Instanz 100.

In Schritt S9 schließlich verifiziert der Dienstanbieter 10 die Antwortnachricht C. Dazu führt er dieselbe kryptographische Operation auf der ursprünglichen Anfragenachricht A mittels des geheimen Datums K durch, welche auch das Sicherheitselement 20 in Schritt S7 durchgeführt hat. In dem Fall, dass das Ergebnis dieser Operation mit der in Schritt S8 empfangenen Antwortnachricht C übereinstimmt, gilt die Authentifizierung des Sicherheitselements 20 gegenüber dem Dienstanbieter 10 als erfolgreich.

Notwendig für eine solche erfolgreiche Authentifizierung ist es insbesondere, dass das Sicherheitselement 20 in Schritt S6 beim Entschlüsseln der verschlüsselten Anfragenachricht als Ergebnis ein Datum B erhält, welches mit der ursprünglichen Anfragenachricht A identisch ist. Dies wiederum kann nur der Fall sein, wenn der zweite kryptographische Schlüssel K_{U'}, der in dem Sicherheitselement 20 auf Basis der aktuellen Umgebung U' des Sicherheitselements 20 abgeleitet worden ist, mit dem in der zentralen Instanz 100 erzeugten ersten kryptographischen Schlüssel Ku übereinstimmte, welcher durch die vorgegebene Umgebung U des Sicherheitselement 20 bestimmt war.

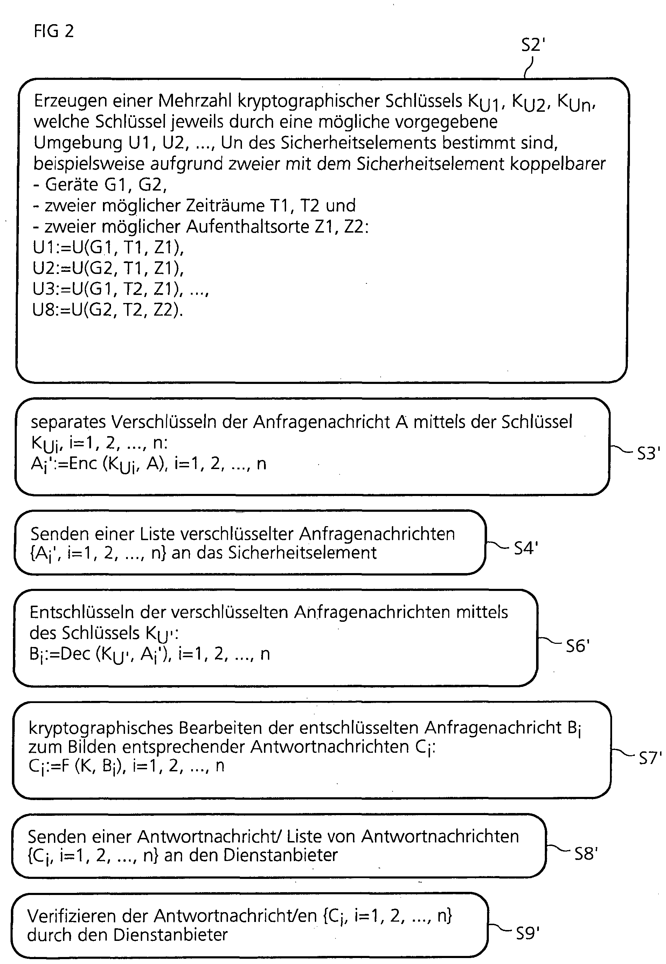

Mit Bezug auf Figur 2 werden ausgewählte Schritte einer bevorzugten Variante eines Verfahrens gemäß Figur 1 beschrieben. Dabei werden diejenigen Schritte ausgelassen, welche im Vergleich zu dem Verfahren nach Figur 1 identisch sind.

Im Unterschied zum Verfahren nach Figur 1 wird gemäß der Variante nach Figur 2 in Schritt S2' nicht lediglich ein erster kryptographischer Schlüssel erzeugt, der von genau einer vorgegebenen Umgebung des Sicherheitselements 20 bestimmt wird, sondern es wird eine Mehrzahl kryptographischer Schlüssel Kui erzeugt, welche jeweils durch eine mögliche vorgegebene Umgebung Ui des Sicherheitselements 20 bestimmt sind.

Hat der Nutzer des Sicherheitselements 20 beispielsweise bei der zentralen Instanz 100 zwei Geräte G1 und G2 vorgegeben, mit welchen das Sicherheitselement 20 zum Durchführen des Verfahrens gekoppelt sein kann und zwei mögliche Zeiträume T1 und T2 zum Durchführen des Verfahrens vorgegeben sowie zwei mögliche Aufenthaltsorte Z1 und Z2, an welchen sich das Sicherheitselement 20 beim Durchführen des Verfahrens befinden kann, so ergeben sich daraus acht mögliche Umgebungsvarianten Ui, die jeweils von Gerät, Ort und Zeit abhängen. Zu jeder dieser möglichen Kombinationen erzeugt die zentrale Instanz 100 nun einen ersten kryptographischen Schlüssel Kui.

In Schritt S3', welcher dem Schritt S3 aus Fig. 1 entspricht, verschlüsselt die zentrale Instanz 100 nun die Anfragenachricht A mittels jedes der in Schritt S2' erzeugten kryptographischen Schlüssel K_{Ui}. Auf diese Weise werden verschiedene verschlüsselte Anfragenachrichten Aᵢ' erhalten.

In Schritt S4', welcher dem Schritt S4 aus Figur 1 entspricht, wird nun die gesamte Liste der verschiedenen, verschlüsselten Antwortnachrichten an das Sicherheitselement 20 gesendet.

In dem nicht erneut dargestellten Schritt S5 erzeugt das Sicherheitselement seinen kryptographischen Schlüssel K_{U'}, welcher von der aktuellen Umgebung abhängt. Beispielsweise wird K_{U'} abgeleitet aus einem Ausgangsschlüssel unter Verwendung der Umgebungsparameter G1, T2, Z2 (der Umgebungsvariablen G, T und Z).

Das Sicherheitselement 20 entschlüsselt dann in Schritt S6', welche dem Schritt S6 nach Figur 1 entspricht, sämtliche der verschlüsselten Anfragenachrichten mittels des in Schritt S5 abgeleiteten zweiten kryptographischen Schlüssels K_{U'}.

In einem nicht dargestellten optionalen Schritt prüft das Sicherheitselement die Ergebnisse der Entschlüsselung, um ein Ergebnis als die zu verwendende Anfragenachricht zu bestimmen. Die Prüfung kann mittels einer einfachen Prüfsumme, wie CRC, einer kryptographischen Prüfsumme/Signatur oder einfach anhand von zu erfüllenden Formatangaben, wie einer korrekten TLV-Struktur, erfolgen. Das Sicherheitselement verwirft abhängig von dem Prüfungsergebnis bestimmte Ergebnisse, welche beispielsweise nicht die Formatvorgabe erfüllen. Die mit dem zur aktuellen Umgebung passenden Schlüssel verschlüsselte Anfragenachricht liefert ein positives Prüfungsergebnis. Die durch die Prüfung bestimmte Anfragenachricht(en) wird(werden) für die weiteren Schritte S6' bis S8' verwendet.

Gemäß einer nicht gezeigten Variante kann die zentrale Instanz 100 in Schritt S3', vor dem Verschlüsseln der Anfragenachricht A mit einem ersten kryptographischen Schlüssel Kui, die Anfragenachricht A jeweils mit einer Prüfsumme versehen. Auf diese Weise wird es für das Sicherheitselement 20, in Schritt S6', möglich zu erkennen, ob eine entschlüsselte Anfragenachricht Bi tatsächlich der ursprünglichen Anfragenachricht A entspricht - anhand einer korrekten Prüfsumme.

Auf diese Weise muss das Sicherheitselement 20 in einem dem Schritt S7' entsprechenden Schritt lediglich noch genau diese eine entschlüsselte Anfragenachricht Bi kryptographisch bearbeiten und in einem dem Schritt S8' entsprechenden Schritt an den Dienstanbieter 10 senden.

Es wird im Folgenden entsprechend berücksichtigt, dass in den Folgeschritten S7' bis S9' eine Anfragenachricht oder eine Liste von (potentiellen) Antwortnachrichten verwendet wird.

In Schritt S7', welcher dem Schritt S7 aus Figur 1 entspricht, werden seitens des Sicherheitselements 20 sämtliche in Schritt S6' erhaltenen entschlüsselten Anfragenachrichten Bi zum Bilden einer entsprechenden Antwortnachricht Cᵢ kryptographisch bearbeitet. Alternativ wird in Schritt S7' nur die Anfragenachricht(en) B2 mit positivem Prüfungsergebnis verwendet.

In Schritt S8', welcher dem Schritt S8 aus Figur 1 entspricht, wird die Antwortnachricht C2 oder die Liste der Antwortnachrichten Cᵢ an den Dienstanbieter 10 gesendet.

In Schritt S9' verifiziert der Dienstanbieter 10 dann, analog zum Schritt S9 aus Figur 1, die eine oder die empfangenen Antwortnachrichten Cᵢ. Im Ergebnis ergibt spätestens die Verifikation die eine der Antwortnachrichten, deren Anfragenachricht mit den gleichen umgebungsabhängigen Schlüsseln verschlüsselt und entschlüsselt wurde.

## Patentansprüche

1. Verfahren zum Durchführen einer kryptographischen Operation zwischen einem Sicherheitselement (20) und einem Dienstanbieter (10), umfassend die Schritte:
- Senden (S1) einer Anfragenachricht (A) durch den Dienstanbieter (10);
- kryptographisches Bearbeiten (S7) der Anfragenachricht (A) durch das Sicherheitselement (20) zum Bilden einer Antwortnachricht (C);
- Senden (S8) der Antwortnachricht (C) an den Dienstanbieter (10); und
- Verifizieren (S9) der Antwortnachricht (C) durch den Dienstanbieter (10);
**dadurch gekennzeichnet, dass** eine zentrale Instanz (100)
- die Anfragenachricht (A) von dem Dienstanbieter (10) empfängt;
- einen ersten kryptographischen Schlüssel (K_{U}) erzeugt (S2), welcher von einer vorgegebenen Umgebung (U) des Sicherheitselements (20) abhängt;
- die Anfragenachricht (A) mittels des ersten kryptographischen Schlüssels (K_{U}) verschlüsselt (S3) und
- die verschlüsselte Anfragenachricht an das Sicherheitselement (20) sendet (S4),
wobei das Sicherheitselement (20)
- einen zweiten kryptographischen Schlüssel (K_{U'}) erzeugt (S5), welcher von einer aktuellen Umgebung (U') des Sicherheitselements (20) abhängt, und
- mittels des zweiten kryptographischen Schlüssels (K_{U'}) die verschlüsselte Anfragenachricht entschlüsselt (S6).

2. Verfahren nach Anspruch 1, **dadurch gekennzeichnet, dass** die Umgebung (U; U') des Sicherheitselements (20) von einem Endgerät (G1; G2) bestimmt wird, mit welchem das Sicherheitselement (20) gekoppelt ist.

3. Verfahren nach Anspruch 1 oder 2, **dadurch gekennzeichnet, dass** die Umgebung (U; U') des Sicherheitselements (20) zeitabhängig ist.

4. Verfahren nach einem der Ansprüche 1 bis 3, **dadurch gekennzeichnet, dass** die Umgebung (U; U') des Sicherheitselements (20) ortsabhängig ist.

5. Verfahren nach einem der Ansprüche 1 bis 4, **dadurch gekennzeichnet, dass** die vorgegebene Umgebung (U) des Sicherheitselements (20 bestimmt wird durch Vorgaben hinsichtlich
- eines mit dem Sicherheitselement (20) zum Durchführen des Verfahrens zu koppelnden Endgeräts (G1; G2) und/oder
- eines Zeitraums (T1; T2) zur verfahrensgemäßen Verwendung des Sicherheitselements und/oder
- eines Aufenthaltsorts (Z1; Z2) des Sicherheitselements zur verfahrensgemäßen Verwendung.

6. Verfahren nach einem der Ansprüche 1 bis 5, **dadurch gekennzeichnet, dass** die aktuelle Umgebung (U') des Sicherheitselements (20) bestimmt wird durch ein Endgerät, mit dem das Sicherheitselement (20) beim Durchführen des Verfahrens gekoppelt ist, und/oder durch den Zeitraum, in dem das Verfahren durchgeführt wird, und/oder durch den Ort, an dem sich das Sicherheitselement (20) beim Durchführen des Verfahrens befindet.

7. Verfahren nach einem der Ansprüche 1 bis 6, **dadurch gekennzeichnet, dass** die zentrale Instanz (100)
eine Mehrzahl von unterschiedlichen ersten kryptographischen Schlüsseln (K_{Ui}) erzeugt (S2'), wobei jeder dieser unterschiedlichen ersten kryptographischen Schlüssel jeweils von einer vorgegebenen Umgebung (Uᵢ) des Sicherheitselements (20) abhängt, und
die Anfragenachricht (A) mittels jedes der Mehrzahl der unterschiedlichen ersten kryptographischen Schlüssel (K_{Ui}) separat verschlüsselt (S3') und
jede der dadurch erhaltenen unterschiedlichen, verschlüsselten Anfragenachrichten an das Sicherheitselement sendet (S4'),
wobei das Sicherheitselement (20) jede der unterschiedlichen, verschlüsselten Anfragenachrichten mittels des zweiten kryptographischen Schlüssels (K_{U'}) entschlüsselt (S6').

8. Verfahren nach Anspruch 7, **dadurch gekennzeichnet, dass** die zentrale Instanz (100) die Anfragenachricht (A) vor dem Verschlüsseln mit einer Prüfsumme versieht, welche Prüfsumme das Sicherheitselement (20) nach dem Entschlüsseln prüft.

9. Verfahren nach einem der Ansprüche 1 bis 8, **dadurch gekennzeichnet, dass** der Dienstanbieter (10) die Anfragenachricht (A) direkt an die zentrale Instanz (100) sendet.

10. Verfahren nach einem der Ansprüche 1 bis 9, **dadurch gekennzeichnet, dass** das Sicherheitselement (20) die Antwortnachricht (C) direkt an den Dienstanbieter (10) sendet.

11. Verfahren nach einem der Ansprüche 1 bis 9, **dadurch gekennzeichnet, dass** das Sicherheitselement (20) die Antwortnachricht (C) an die zentrale Instanz (100) sendet, welche die Antwortnachricht (C) an den Dienstanbieter (10) weiterleitet.

12. Zentrale Instanz (100), umfassend eine Umgebungsschlüsselverwaltungseinrichtung, die eingerichtet ist, mit Bezug auf ein Sicherheitselement (20)
- einen kryptographischen Schlüssel (K_{U}) zu erzeugen, welcher von einer vorgegebenen Umgebung (U) des Sicherheitselements (20) abhängt;
- eine empfangene, für das Sicherheitselement (20) bestimmte Anfragenachricht (A) mittels des kryptographischen Schlüssels (K_{U}) zu verschlüsseln und
- die verschlüsselte Anfragenachricht an das Sicherheitselement (20) zu senden.

13. Zentrale Instanz (100) nach Anspruch 12, **dadurch gekennzeichnet, dass** die zentrale Instanz (100) weiter eingerichtet ist, eine seitens des Sicherheitselements (20) in Antwort auf die verschlüsselte Anfragenachricht empfangene Antwortnachricht (C) an einen Dienstanbieter (10) weiterzuleiten.

14. Sicherheitselement (20), umfassend
- eine Umgebungsschlüsselableitungseinrichtung, welche eingerichtet ist, einen kryptographischen Schlüssel (K_{U'}) zu erzeugen, welcher von einer aktuellen Umgebung (U') des Sicherheitselements (20) abhängt, und
- eine Verarbeitungseinrichtung, welche eingerichtet ist,
mittels des kryptographischen Schlüssels (K_{U'}) eine empfangene, verschlüsselte Anfragenachricht zu entschlüsseln, und
die entschlüsselte Anfragenachricht zum Bilden einer Antwortnachricht (C) kryptographisch zu bearbeiten.

15. System, umfassend zumindest einen Dienstanbieter (10), eine zentrale Instanz (100) nach Anspruch 12 oder 13 sowie zumindest ein Sicherheitselement (20) nach Anspruch 14, welche jeweils eingerichtet sind, ein Verfahren nach einem der Ansprüche 1 bis 11 durchzuführen.

## Claims

1. A method for carrying out a cryptographic operation between a security element (20) and a service provider (10), comprising the steps of:
- transmitting (S1) a query message (A) by the service provider (10);
- cryptographically processing (S7) the query message (A) by the security element (20) for forming a response message (C);
- transmitting (S8) the response message (C) to the service provider (10); and
- verifying (S9) the response message (C) by the service provider (10); **characterized in that** a central entity (100)
- receives the query message (A) from the service provider (10);
- generates (S2) a first cryptographic key (K_{U}) which depends on a pre-specified environment (U) of the security element (20);
- encrypts (S3) the query message (A) by means of the first cryptographic key (K_{U}), and
- transmits (S4) the encrypted query message to the security element (20), wherein the security element (20)
- generates (S5) a second cryptographic key (K_{U'}) which depends on a current environment (U') of the security element (20), and
- decrypts (S6) the encrypted query message by means of the second cryptographic key (K_{U'}).

2. The method according to claim 1, **characterized in that** the environment (U; U') of the security element (20) is determined by an end device (G1; G2) with which the security element (20) is coupled.

3. The method according to claim 1 or 2, **characterized in that** the environment (U; U') of the security element (20) is time-dependent.

4. The method according to any of claims 1 to 3, **characterized in that** the environment (U; U') of the security element (20) is place-dependent.

5. The method according to any of claims 1 to 4, **characterized in that** the pre-specified environment (U) of the security element (20) is determined by specifications concerning
- an end device (G1; G2) to be coupled with the security element (20) for carrying out the method, and/or
- a time period (T1; T2) for employing the security element in accordance with the method, and/or
- a location (Z1; Z2) of the security element for employment in accordance with the method.

6. The method according to any of claims 1 to 5, **characterized in that** the current environment (U') of the security element (20) is determined by an end device with which the security element (20) is coupled while the method is carried out, and/or by the time period in which the method is carried out, and/or by the place where the security element (20) is located while the method is carried out.

7. The method according to any of claims 1 to 6, **characterized in that** the central entity (100)
- generates (S2') a plurality of different first cryptographic keys (K_{Ui}), with each of said different first cryptographic keys respectively depending on a pre-specified environment (Uᵢ) of the security element (20), and
- separately encrypts (S3') the query message (A) by means of each of the plurality of different first cryptographic keys (K_{Ui}), and
- transmits (54') each of the thereby obtained different, encrypted query messages to the security element, wherein the security element (20) decrypts (S6') each of the different, encrypted query messages by means of the second cryptographic key (K_{U'}).

8. The method according to claim 7, **characterized in that** the central entity (100) equips the query message (A) with a checksum before encrypting, which checksum the security element (20) checks after decrypting.

9. The method according to any of claims 1 to 8, **characterized in that** the service provider (10) transmits the query message (A) directly to the central entity (100).

10. The method according to any of claims 1 to 9, **characterized in that** the security element (20) transmits the response message (C) directly to the service provider (10).

11. The method according to any of claims 1 to 9, **characterized in that** the security element (20) transmits the response message (C) to the central entity (100), which relays the response message (C) to the service provider (10).

12. A central entity (100), comprising an environment key management device which is arranged, with reference to a security element (20),
- to generate a cryptographic key (K_{U}) which depends on a pre-specified environment (U) of the security element (20);
- to encrypt by means of the cryptographic key (K_{U}) a received query message (A) intended for the security element (20), and
- to transmit the encrypted query message to the security element (20).

13. The central entity (100) according to claim 12, **characterized in that** the central entity (100) is further arranged to relay a response message (C) received in response to the encrypted query message on the part of the security element (20) to a service provider (10).

14. A security element (20), comprising
- an environment key deriving device which is arranged to generate a cryptographic key (K_{U'}) which depends on a current environment (U') of the security element (20), and
- a processing device which is arranged
to decrypt a received, encrypted query message by means of the cryptographic key (K_{U'}), and
to cryptographically process the decrypted query message for forming a response message (C).

15. A system, comprising at least one service provider (10), a central entity (100) according to claim 12 or 13, and at least one security element (20) according to claim 14, which are respectively arranged to carry out a method according to any of claims 1 to 11.

## Revendications

1. Procédé d'exécution d'une opération cryptographique entre un élément de sécurité (20) et un fournisseur de services (10), comprenant les étapes :
- envoi (S1) d'un message de demande (A) par le fournisseur de services (10) ;
- traitement cryptographique (S7) du message de demande (A) par l'élément de sécurité (20) pour la constitution d'un message de réponse (C) ;
- envoi (S8) du message de réponse (C) au fournisseur de services (10) ; et
- vérification (S9) du message de réponse (C) par le fournisseur de services (10) ;
**caractérisé en ce qu'**une instance centrale (100)
- reçoit le message de demande (A) du fournisseur de services (10) ;
- génère (S2) une première clé cryptographique (K_{U}) qui dépend d'un environnement (U) prédéterminé de l'élément de sécurité (20) ;
- crypte (S3) le message de demande (A) au moyen de la première clé cryptographique (K_{U}), et
- envoie (S4) à l'élément de sécurité (20) le message de demande crypté cependant que l'élément de sécurité (20)
- génère (S5) une deuxième clé cryptographique (K_{U'}) qui dépend d'un environnement (U') actuel de l'élément de sécurité (20), et
- au moyen de la deuxième clé cryptographique (K_{U'}), décrypte (S6) le message de demande crypté.

2. Procédé selon la revendication 1, **caractérisé en ce que** l'environnement (U; U') de l'élément de sécurité (20) est déterminé par un terminal (G1; G2) avec lequel l'élément de sécurité (20) est couplé.

3. Procédé selon la revendication 1 ou 2, **caractérisé en ce que** l'environnement (U; U') de l'élément de sécurité (20) dépend du temps.

4. Procédé selon une des revendications de 1 à 3, **caractérisé en ce que** l'environnement (U; U') de l'élément de sécurité (20) dépend du lieu.

5. Procédé selon une des revendications de 1 à 4, **caractérisé en ce que** l'environnement (U) prédéterminé de l'élément de sécurité (20) est déterminé par des prescriptions concernant
- un terminal (G1; G2) à coupler avec lequel l'élément de sécurité (20) pour exécuter le procédé, et/ou
- un laps de temps (T1; T2) pour l'utilisation, suivant le procédé, de l'élément de sécurité, et/ ou
- un emplacement (Z1; Z2) de l'élément de sécurité pour l'utilisation suivant le procédé.

6. Procédé selon une des revendications de 1 à 5, **caractérisé en ce que** l'environnement (U') actuel de l'élément de sécurité (20) est déterminé par un terminal avec lequel l'élément de sécurité (20) est couplé lors de l'exécution du procédé, et/ou par le laps de temps dans lequel le procédé est exécuté, et/ou par le lieu auquel l'élément de sécurité (20) se trouve lors de l'exécution du procédé.

7. Procédé selon une des revendications de 1 à 6, **caractérisé en ce que** l'instance centrale (100)
génère (S2') une pluralité de premières clés cryptographiques (K_{Ui}) différentes, cependant que chacune de ces premières clés cryptographiques différentes dépend respectivement d'un environnement (Uᵢ) prédéterminé de l'élément de sécurité (20), et
crypte (S3') séparément le message de demande (A) au moyen de chacune de la pluralité des premières clés cryptographiques (K_{Ui}) différentes, et
envoie (S4') à l'élément de sécurité chacun des messages de demande cryptés différents ainsi obtenus,
cependant que l'élément de sécurité (20) décrypte (S6') au moyen de la deuxième clé cryptographique (K_{U'}) chacun des messages de demande cryptés différents.

8. Procédé selon la revendication 7, **caractérisé en ce que** l'instance centrale (100) pourvoit d'une somme de contrôle le message de demande (A) avant le cryptage, laquelle somme de contrôle vérifie l'élément de sécurité (20) après le décryptage.

9. Procédé selon une des revendications de 1 à 8, **caractérisé en ce que** le fournisseur de services (10) envoie le message de demande (A) directement à l'instance centrale (100).

10. Procédé selon une des revendications de 1 à 9, **caractérisé en ce que** l'élément de sécurité (20) envoie le message de réponse (C) directement au fournisseur de services (10).

11. Procédé selon une des revendications de 1 à 9, **caractérisé en ce que** l'élément de sécurité (20) envoie le message de réponse (C) à l'instance centrale (100), laquelle transfère le message de réponse (C) au fournisseur de services (10).

12. Instance centrale (100) comprenant un dispositif de gestion de clé d'environnement conçu pour, relativement à l'élément de sécurité (20),
- générer une clé cryptographique (K_{U}) qui dépend d'un environnement (U) prédéterminé de l'élément de sécurité (20) ;
- crypter un message de demande (A) reçu, destiné à l'élément de sécurité (20), au moyen de la clé cryptographique (K_{U}), et
- envoyer à l'élément de sécurité (20) le message de demande crypté.

13. Instance centrale (100) selon la revendication 12, **caractérisée en ce que** l'instance centrale (100) est en outre conçue pour transférer à un fournisseur de services (10) un message de réponse (C) reçu par l'élément de sécurité (20) en réponse au message de demande crypté.

14. Elément de sécurité (20), comprenant
- un dispositif de dérivation de clé d'environnement conçu pour générer une clé cryptographique (K_{U'}) qui dépend d'un environnement actuel (U') de l'élément de sécurité (20), et
- un dispositif de traitement conçu pour,
au moyen de la clé cryptographique (K_{U'}), décrypter un message de demande crypté reçu, et
traiter le message de demande décrypté pour la constitution d'un message de réponse (C).

15. Système comprenant au moins un fournisseur de services (10), une instance centrale (100) selon la revendication 12 ou 13, ainsi qu'au moins un élément de sécurité (20) selon la revendication 14, lesquels sont respectivement conçus pour exécuter un procédé selon une des revendications de 1 à 11.
